# EUROPÄISCHE PATENTSCHRIFT

(11) **EP 1 568 662 B1**
(45) Veröffentlichungstag und Bekanntmachung des Hinweises auf die Patenterteilung: **09.04.2008**
(21) Anmeldenummer: 05003755.5
(22) Anmeldetag: 22.02.2005
(51) Int. Cl.: C02F 3/12, C02F 1/44

(54) **Membranbioreaktor und Verfahren zur Reinigung von Abwässern**
Membrane bioreactor and method for wastewater treatment
Bioreacteur à membrane et méthode de traitement des eaux résiduelles

(30) Priorität: 25.02.2004 DE 102004009559
(43) Veröffentlichungstag der Anmeldung: 31.08.2005
(73) Patentinhaber: Bilfinger Berger Umwelttechnik GmbH, 65326 Aarbergen (DE)
(72) Erfinder: Karl Seel, 65326 Aaarbergen (DE)
(74) Vertreter: KEIL & SCHAAFHAUSEN Patentanwälte

(56) Entgegenhaltungen:
- WO-A-03/002468
- PATENT ABSTRACTS OF JAPAN Bd. 1997, Nr. 10, 31. Oktober 1997 (1997-10-31) & JP 09 164398 A (MITSUI PETROCHEM IND LTD; MITSUI ZOSEN ENG KK), 24. Juni 1997 (1997-06-24)

## Beschreibung

Die Erfindung betrifft einen Membranbioreaktor zur Reinigung von insbesondere kommunalem Abwasser mit einem Belebungsbecken, in dem Schmutzstoffe durch aerobe Stoffwechselprozesse von Mikroorganismen abbaubar sind, und wenigstens einer in einem Zulauf des Belebungsbeckens angeordneten Filtereinrichtung, wobei in dem Belebungsbecken wenigstens eine Membran zum Rückhalten der Mikroorganismen in dem Belebungsbecken angeordnet ist. Weiter betrifft die Erfindung die Verwendung eines Filters in einem derartigen Membranbioreaktor sowie ein Verfahren zur Reinigung von Abwasser.

Schmutzstoffe sowie Kohlenstoff-, Phosphor- oder Stickstoffverbindungen können durch Mikroorganismen in Abwasserbehandlungsanlagen abgebaut werden. Derartige Verfahren sind beispielsweise in der DE 41 09 815 A1 oder DE 44 37 386 A1 beschrieben. Der Abbau dieser Verunreinigungen erfolgt üblicherweise in Belebungsbecken, welche aufgrund der Zufuhr von (Luft-)Sauerstoff für die aeroben Stoffwechselprozesse häufig auch als Belüftungsbecken bezeichnet werden. Der Belebtschlamm kann dann in Nachklärbecken durch Sedimentation abgetrennt und in das Belebungsbecken zurückgeführt werden. Häufig sind darüber hinaus weitere Filtervorgänge erforderlich, bevor das derart gereinigte Abwasser in Flüsse oder dgl. eingeleitet werden kann.

In jüngster Zeit werden zur Durchführung derartiger Belebungsverfahren auch Membranbioreaktoren eingesetzt, bei denen sogenannte Mikrofiltrationsmembrane in dem Belebungsbecken Schlamm, Feststoffe, Keime und Bakterien abfiltern, so dass diese nicht in einen Ablauf für gereinigtes Abwasser gelangen können. Auf diese Weise kann direkt in dem Belebungsbecken die Nachklärung sowie die Filtration und ggf. auch die Entkeimung erfolgen, so dass klares, gereinigtes Wasser aus dem Belebungsbecken abgeleitet werden kann. Derartige Anlagen sind damit in der Regel kompakter und es entfallen zusätzliche Bauwerke für Nachklärbecken oder weitere Filtrationsstufen. Zudem können diese Belebungsbecken mit höheren Schlammkonzentrationen und einem höheren Schlammalter betrieben werden, so dass wesentlich kleinere Belebungsbecken erforderlich sind.

In der Praxis hat sich jedoch herausgestellt, dass die sehr kleinen Poren der Mikrofiltrationsmembrane häufig verstopfen, wodurch ein limitierter Abtransport und ein Rückstau von Abwasser in dem Belebungsbecken auftreten kann. Aus der JP 09 164398 A ist es bekannt, dem Belebungsbecken eine Makrosiebung vorzuschalten. In der WO 03/002468 A1 wird ein Feinsieb mit einer Maschenweite von 0,25 mm vorgeschlagen. Bei großen Abwassermengen arbeiten diese bekannten Anlagen teilweise unzuverlässig, so dass Funktionsstörungen auftreten können.

Aufgabe der vorliegenden Erfindung ist demgegenüber, einen Membranbioreaktor sowie ein Verfahren zur Reinigung von Abwasser bereitzustellen, die einen möglichst wartungsfreien Betrieb bei gutem Abtransport des Abwassers und ausreichende Zufuhr von Mikroorganismen in das Belebungsbecken ermöglichen.

Diese Aufgabe wird mit einem Membranbioreaktor der eingangs genannten Art im Wesentlichen dadurch gelöst, dass die dem Belebungsbecken vorgeschaltete Filtereinrichtung eine Mikrotrommelsiebmaschine als Feinsieb mit einer Maschenweite zwischen 150 µm und 350 µm aufweist. Die Mikrotrommelsiebmaschine wird dabei kontinuierlich oder diskontinuierlich mit Druckluft und/oder gesiebtem Abwasser als Spritzwasser gereinigt. Ein besonders bevorzugter Bereich der Maschenweite des Feinsiebes liegt erfindungsgemäß, insbesondere
bei etwa 250 µm. Überraschend wurde herausgefunden, dass bei derartigen Maschenweiten eines Feinsiebes Haare und dgl. Rückstände zuverlässig aus dem Abwasser gefiltert werden können, ohne jedoch die Zufuhr von Mikroorganismen mit dem Abwasser in das Belebungsbecken zu behindern. Durch die Feinsiebung des Abwasser vor der Zufuhr zu dem Belebungsbecken werden die feinporigen Membrane deutlich weniger belegt, so dass eine Reinigung oder Wartung der Membrane allenfalls in vergleichsweise großen Zeitintervallen erforderlich ist. Erfindungsgemäß weist die Mikrotrommelsiebmaschine eine antreibbare, mit mehreren Filterkörben versehene Trommel, in welche ein Abwasserzulauf mündet, sowie ein mit dem Belebungsbecken verbundenes Ablaufbecken auf. Durch die Gestaltung des Feinsiebs als eine Mikrotrommelsiebmaschine lassen sich auch bei großen Abwassermengen die die Membran gefährdenden Inhaltsstoffe wirkungsvoll aus dem Abwasser zurückhalten, so dass eine große Durchsatzmenge durch den Membranbioreaktor ermöglicht wird, ohne die Membrane zu zerstören oder deren Funktionsfähigkeit zu behindern.

In der Mikrotrommelsiebmaschine kann dabei eine Reinigungseinrichtung mit einer die Filter von der Ablaufseite beaufschlagten Abspritzvorrichtung und einer auf der Zulaufseite des Filters angeordneten Auffang- und Ableiteinrichtung versehen sein. Derartige Mikrotrommelsiebmaschinen ermöglichen einen nahezu wartungsfreien Betrieb, wobei für die Filterung des Abwassers große Filterflächen zur Verfügung stehen. Durch die Reinigungseinrichtung arbeiten die Mikrotrommelsiebmaschinen selbstreinigend, so dass auch bei starker Schmutzbelastung des Abwassers ein kontinuierlicher Betrieb möglich ist.

Die Abspritzeinrichtung kann bspw. als Spritzwasser das gesiebte Abwasser der Mikrotrommelsiebmaschine nutzen, welches dann als Schmutzwasser zusammen mit dem Siebgut über einen Trog aus dem System ausgeschleust wird.

Hierdurch wird jedoch auch gleichzeitig der Zufluss an Abwasser zur Biologie verringert. Daher kann alternativ oder zusätzlich zu dem Abwasser Druckluft zur Reinigung der Filterkörbe eingesetzt werden.

Bei Einsatz von Druckluft zur Siebgutreinigung werden die ausgesiebten Feststoffe im Inneren der Siebtrommel in einen Abwurftrichter abgeworfen und bspw. mittels einer Förderspirale, einer Spiralpresse oder einer Schneckenpresse aus der Siebtrommel ausgetragen. Hierdurch kann das Gemisch aus Siebgut und Wasser gleichzeitig entwässert und kompaktiert werden. Wird das ausgepresste Wasser in den biologischen Prozess zurückgeführt, ist die Zufuhr von Mikroorganismen mit dem Abwasser in das Belebungsbecken durch die Filterreinigung nicht behindert und es können sehr hohe TS - Gehalte im Siebgut erzielt werden.

Die Mikrosiebung mit integrierter Austragsfördertechnik kann gleichzeitig mit einem vorgeschalteten Sandfang kombiniert werden. Der separate Bau eines Sandfanges im Klärwerk kann damit eingespart werden.

Besonders gute Filterergebnisse lassen sich erzielen, wenn die Filter der Mikrotrommelsiebmaschine durch ein Filtergewebe, beispielsweise aus Polyester (PES) gebildet sind.

Die Reinigung und das Austauschen der Membrane in dem Belebungsbecken kann dadurch erleichtert werden, dass in dem Belebungsbecken mehrere Kassetten oder Module mit jeweils wenigstens einer Membran angeordnet sind. Diese Kassetten oder Module sind vorzugsweise zur Ableitung von durch die Membrane durchtretendem gereinigtem Abwasser mit einem Ablauf verbunden.

Zur Durchführung der biologischen Reinigung des Abwassers in dem Belebungsbecken kann es erforderlich sein, dass diesem eine Einrichtung zur Zufuhr Zufuhr von sauerstoffhaltigem Gas, wie beispielsweise Luft, in das Abwasser zugeordnet ist.

Die Erfindung zugrunde liegende Aufgabe wird zudem durch ein Verfahren zur Reinigung von bspw. kommunalem Abwasser gelöst, bei welchem das Abwasser nach einer Filterung einem Belebungsbecken zugeleitet wird, in dem Schmutzstoffe durch aerobe Stoffwechselprozesse von Mikroorganismen abgebaut werden. Die Mikroorganismen werden dabei zumindest teilweise in dem Belebungsbecken durch wenigstens eine Membran zurückgehalten, während das von den Mikroorganismen gereinigte Abwasser aus dem Belebungsbecken abgeleitet wird. Die Filterung soll erfindungsgemäß mittels eines Feinsiebes mit einer Maschenweite von 150 µm bis 350 µm derart erfolgen, dass Mikroorganismen das Feinsieb passieren können. Erfindungsgemäß wird die Filterung durch eine Mikrotrommelsiebmaschin durchgeführt, die mit Druckluft und/oder gesiebtem Abwasser gereinigt wird.

Dem Belebungsbecken kann zusätzlich eine Nitrifikations- und/oder eine Denitrifikationszone vorgeschaltet sein. Zusätzlich oder alternativ hierzu können vor dem Belebungsbecken auch ein Sandfang und/oder ein Fettabscheider angeordnet werden. Die Filterung kann dabei unmittelbar vor dem Belebungsbecken angeordnet werden oder alternativ stromaufwärts des Sandfangs oder des Fettabscheiders vorgesehen sein.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: den schematischen Aufbau eines erfindungsgemäßen Membranbioreaktors,
- Fig. 2: einen Längsschnitt durch eine Mikrotrommelsiebmaschine und
- Fig. 3: einen Querschnitt durch eine Mikrotrommelsiebmaschine.

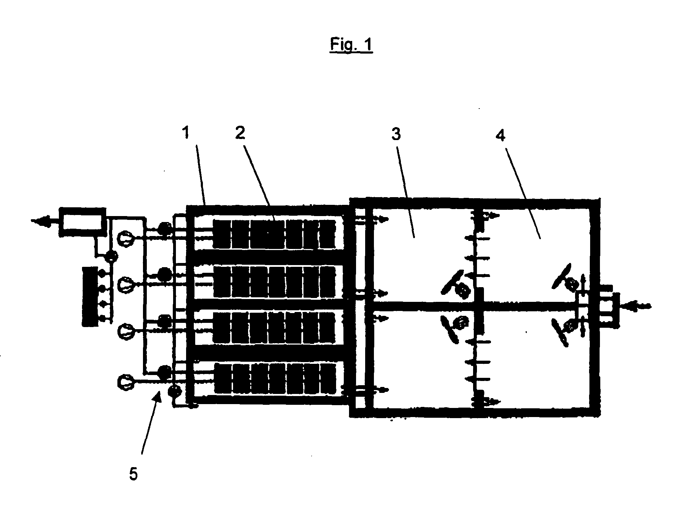

Der in Fig. 1 dargestellte Membranbioreaktor weist ein Belebungsbecken 1 auf, in welchem Abwasser durch aerobe Stoffwechselprozesse von Mikroorganismen biologisch von Schmutzstoffen gereinigt wird. In dem Belebungsbecken 1 sind jeweils mehrere Kassetten 2 oder Module mit jeweils einer Membran angeordnet, die den Belebtschlamm, Bakterien und Viren sowie Schmutzstoffe in dem Belebungsbecken zurückhält. Hierdurch steigt die Schlammkonzentration und das Schlammalter in dem Belebungsbecken 1.

Das über eine Nitrifikationszone 3 sowie eine Denitrifikationszone 4 dem Belebungsbecken 1 zugeführte Abwasser wird auf diese Weise gefiltert, so dass Reinwasser über eine mit Bezugsziffer 5 gekennzeichnete Anordnung von Rohrleitungen und/oder Pumpen aus dem Belebungsbecken abgeführt werden kann.

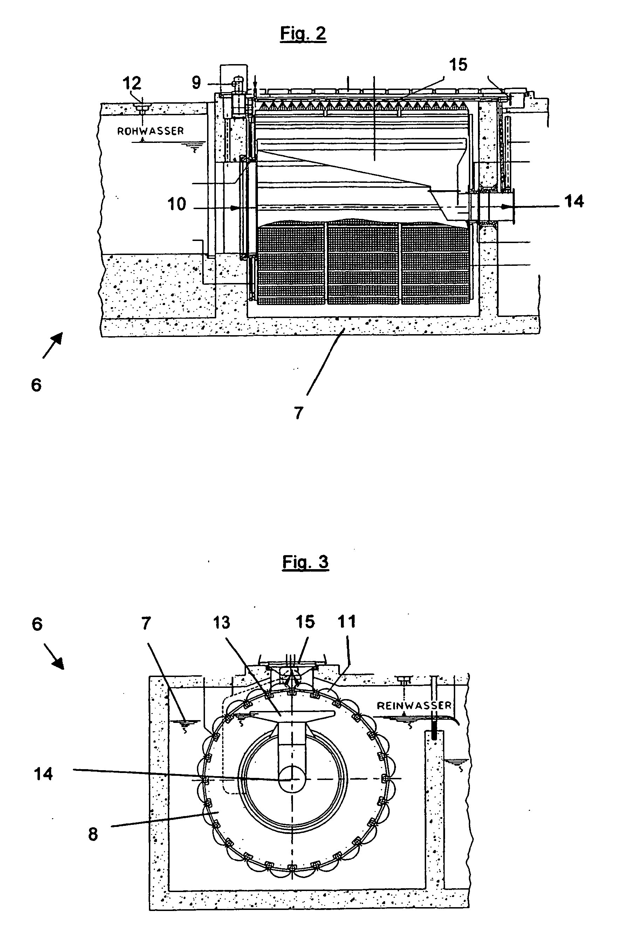

Dem Belebungsbecken 1 ist eine in Fig. 1 nicht dargestellte Filtereinrichtung zur Feinsiebung vorgeschaltet, welche durch eine in den Fig. 2 und 3 dargestellte Mikrotrommelsiebmaschine 6 gebildet ist. Die Mikrotrommelsiebmaschine 6 weist eine in einem Becken 7 drehbar gelagerte Trommel 8 auf, welche durch einen Motor 9 antreibbar ist. Das Innere der Trommel 8 ist durch einen Zulauf 10 mit einem auf der linken Seite der Fig. 2 dargestellten Zulauf für Ab- oder Rohwasser verbunden.

Während die Stirnseiten der Trommel 8 durch Kopfplatten verschlossen sind, ist die Umfangsfläche der Trommel 8 durch mehrere rinnenförmig gestaltete Filterkörbe 11 gebildet. Die Filterkörbe 11 weisen ein Filtergewebe aus Polyester oder einem anderen geeigneten Stoff auf, so dass ein Feinsieb mit einer Maschenweite von weniger 1 mm, im dargestellten Ausführungsbeispiel etwa 250 µm, gebildet wird. Auf diese Weise kann Reinwasser durch das Filtergewebe in das Becken 7 durchtreten und über einen in Fig. 3 dargestellten Überlauf dem Belebungsbecken 1 zugeleitet werden. Ggf. sind zwischen der Mikrotrommelsiebmaschine 6 und dem Belebungsbecken 1 weitere Abwasserbehandlungsstufen, wie ein Sandfang und/oder ein Fettabscheider vorgesehen.

Mikroorganismen, die für die biologische Reinigung des Abwassers in dem Belebungsbecken 1 erforderlich sind, können dabei das durch die Mikrotrommelsiebmaschine 6 gebildete Feinsieb passieren und in das Belebungsbecken 1 gelangen, während Schmutzstoffe wie Haare oder dgl., die einen störungsfreien Betrieb der Membrane 2 in dem Belebungsbecken 1 unmöglich machen würden, in den Filterkörben 11 der Mikrotrommelsiebmaschine 6 zurückgehalten werden.

Wenn das Filtergewebe der Mikrotrommelsiebmaschine 6 belegt ist, sinkt die Durchflussrate des Abwassers durch die Mikrotrommelsiebmaschine 6, so dass der Flüssigkeitspegel in der in Fig. 2 linken Kammer ansteigt. Dies kann durch einen Sensor 12 erfasst werden, der mit einer Steuerung des Motors 9 derart verbunden ist, dass die Trommel 8 bei einem Anstieg des Flüssigkeitspegels in Rotation versetzt wird. Hierdurch fallen die in den Filterkörben 11 aufgenommenen Schmutzstoffe in eine Schmutzwasserrinne 13, die im Inneren der Trommel angeordnet ist und mit einem Schmutzwasserablauf 14 verbunden ist. Zusätzlich kann der Inhalt der Filterkörbe 11 durch eine Abspritzvorrichtung 15 gereinigt und in die Schmutzwasserrinne 13 entleert werden.

Die Mikrotrommelsiebmaschine ist daher für den kontinuierlichen und selbstreinigenden Betrieb ausgelegt, so dass auch große Mengen Abwasser effizient von Schmutzstoffen gereinigt werden können. Somit werden dem Belebungsbecken 1 nur solche Feststoffe zugeführt, die die Funktionsfähigkeit der Membran 2 nicht behindern. Die Siebung in der Mikrotrommelsiebmaschine 6 hat dabei den Vorteil, dass sie hauptsächlich nur die Wasserinhaltsstoffe zurückhält, die der biologischen Verarbeitung in dem Belebungsbecken nicht unmittelbar als Biomasse zur Verfügung stehen.

### Bezugszeichen:

- 1: Belebungsbecken
- 2: Kassette mit Membran
- 3: Nitrifikationszone
- 4: Denitrifikationszone
- 5: Pumpen- und Leitungsanordnung
- 6: Mikrotrommelsiebmaschine
- 7: Becken
- 8: Trommel
- 9: Motor
- 10: Abwasserzulauf
- 11: Filterkorb
- 12: Sensor
- 13: Schmutzwasserrinne
- 14: Schmutzwasserablauf
- 15: Abspritzvorrichtung

## Patentansprüche

1. Membranbioreaktor zur Reinigung von insbesondere kommunalem Abwasser mit einem Belebungsbecken (1), in dem Schmutzstoffe durch aerobe Stoffwechselprozesse von Mikroorganismen abbaubar sind, und wenigstens einer in einem Zulauf des Belebungsbeckens (1) angeordneten Filtereinrichtung (6), wobei in dem Belebungsbecken (1) wenigstens eine Membran (2) zum Rückhalten der Mikroorganismen in dem Belebungsbecken (1) angeordnet ist, **dadurch gekennzeichnet, dass** die Filtereinrichtung eine Mikrotrommelsiebmaschine (6) als Feinsieb mit einer Maschenweite von 150 µm bis 350 µm aufweist, wobei die Mikrotrommelsiebmaschine (6) eine antreibbare, mit mehreren Filterkörben (11) versehene Trommel (8), in die ein Abwasserzulauf (10) mündet, und ein mit dem Belebungsbecken (1) verbundenes Ablaufbecken aufweist, und dass der Mikrotrommelsiebmaschine (6) eine Einrichtung zur kontinuierlichen oder diskontinuierlichen Reinigung der Mikrotrommelsiebmaschine (6) mit Druckluft und/oder gesiebtem Abwasser als Spritzwasser zugeordnet ist.

2. Membranbioreaktor nach Anspruch 1, **dadurch gekennzeichnet, dass** die Filtereinrichtung (6) ein Feinsieb mit einer Maschenweite von etwa 250 µm aufweist.

3. Membranbioreaktor nach einem der Ansprüche 1 oder 2, **dadurch gekennzeichnet, dass** in der Mikrotrommelsiebmaschine (6) eine Reinigungseinrichtung (13, 14, 15) mit einer die Filter (11) von der Ablaufseite beaufschlagenden Abspritzvorrichtung (15) und einer auf der Zulaufseite des Filters (11) angeordneten Auffang- und Ableiteinrichtung (13, 14) vorgesehen ist.

4. Membranbioreaktor nach einem der Ansprüche 1 bis 3, **dadurch gekennzeichnet, dass** der Auffang- und Ableiteinrichtung (13, 14) eine Förderspirale, eine Spiralpresse oder eine Schneckenpresse zur Entwässerung und Kompaktierung des Siebgutes zugeordnet ist.

5. Membranbioreaktor nach Anspruch 4, **dadurch gekennzeichnet, dass** der Auffang- und Ableiteinrichtung (13, 14) und/oder der Förderspirale, der Spiralpresse oder der Schneckenpresse ein Sandfang zugeordnet ist.

6. Membranbioreaktor nach einem der Ansprüche 1 bis 5, **dadurch gekennzeichnet, dass** die Filter (11) der Mikrotrommelsiebmaschine (6) durch ein Filtergewebe, insbesondere aus Polyester (PES) gebildet sind.

7. Membranbioreaktor nach einem der vorhergehenden Ansprüche, **dadurch gekennzeichnet, dass** in dem Belebungsbecken (1) mehrere Kassetten (2) oder Module mit jeweils wenigstens einer Membran angeordnet sind, wobei die Kassetten (2) oder Module zur Ableitung von durch die jeweils wenigstens eine Membran durchtretendem gereinigten Abwasser mit einem Ablauf (5) verbunden sind.

8. Membranbioreaktor nach einem der vorhergehenden Ansprüche, **dadurch gekennzeichnet, dass** dem Belebungsbecken (1) eine Einrichtung zur Zufuhr von sauerstoffhaltigem Gas, wie Luft, in das Abwasser zugeordnet ist.

9. Verfahren zur Reinigung von insbesondere kommunalem Abwasser, bei welchem das Abwasser nach einer Filterung einem Belebungsbecken (1) zugeleitet wird, in dem Schmutzstoffe durch aerobe Stoffwechselprozesse von Mikroorganismen abgebaut werden, wobei die Mikroorganismen zumindest teilweise in dem Belebungsbecken (1) durch wenigstens eine Membran (2) zurückgehalten werden, während das von den Mikroorganismen gereinigte Abwasser aus dem Belebungsbecken (1) abgeleitet wird, wobei die Filterung mittels eines Feinsiebes (6) mit einer Maschenweite von 150 µm bis 350 µm derart erfolgt, dass Mikroorganismen das Feinsieb (6) passieren können, **dadurch gekennzeichnet, dass** als Feinsieb eine Mikrotrommelsiebmaschine (6) vorgesehen ist, die kontinuierlich oder diskontinuierlich mit Druckluft und/oder gesiebtem Abwasser als Spritzwasser gereinigt wird.

10. Verfahren nach Anspruch 9, **dadurch gekennzeichnet, dass** die Filterung in einer Mikrotrommelsiebmaschine (6) mit einer Maschenweite von etwa 250 µm erfolgt.

11. Verfahren nach einem der Ansprüche 9 oder 10, **dadurch gekennzeichnet, dass** in das Belebungsbecken (1) sauerstoffhaltiges Gas, wie Luft, eingebracht wird.

12. Verfahren nach einem der Ansprüche 9 bis 11, **dadurch gekennzeichnet, dass** dem Belebungsbecken (1) eine Nitrifikations- und/oder eine Denitrifikationszone (4), ein Sandfang und/oder eine Fettabscheider vorgeschaltet wird.

13. Verfahren nach einem der Ansprüche 9 bis 12, **dadurch gekennzeichnet, dass** das Siebgut über eine Förderspirale, eine Spiralpresse oder eine Schneckenpresse entwässert und kompaktiert wird.

## Claims

1. Membrane bioreactor for cleaning, in particular, domestic waste water with an activated sludge tank (1) in which contaminants can be broken down through aerobic metabolic processes by micro-organisms, and at least one filter unit (6) arranged in an inlet of the activated sludge tank (1), wherein arranged in the activated sludge tank (1) is at least one membrane (2) for holding back the micro-organisms in the activated sludge tank (1), **characterised in that** the filter unit (6) has a micro-drum sieve machine (6) as a fine sieve with a mesh size of 150 µm to 350 µm, wherein the micro-drum sieve machine (6) has a drivable drum (8) equipped with several sieve baskets (11), opening into which is a waste water inlet (10), and an outflow tank that is connected to the activated sludge tank (1), and that assigned to the micro-drum sieve machine (6) is a device for continuously or discontinuously cleaning the micro-drum sieve machine (6) with compressed air and/or screened waste water as a wash-down spray.

2. Membrane bioreactor according to claim 1, **characterised in that** the filter unit (6) has a fine sieve with a mesh size of about 250 µm.

3. Membrane bioreactor according to one of the claims 1 or 2, **characterised in that** provided in the micro-drum sieve machine (6) is a cleaning device (13, 14, 15) with a wash-down spray device (15) that impinges on the filter (11) from the outlet side, and an interceptor and diverter device (13, 14) that is arranged on the inlet side of the filter (11).

4. Membrane bioreactor according to one of the claims 1 to 3, **characterised in that** assigned to the interceptor and diverter device (13, 14) is a conveyor coil, a spiral press or a worm press for dehydrating and compacting the filtered matter.

5. Membrane bioreactor according to claim 4, **characterised in that** a grit interceptor is assigned to the interceptor and diverter device (13, 14) and/or the conveyor coil, the spiral press or the worm press.

6. Membrane bioreactor according to one of the claims 1 to 5, **characterised in that** the filters (11) of the micro-drum sieve machine (6) are formed by a filter cloth, in particular of polyester (PES).

7. Membrane bioreactor according to one of the preceding claims, **characterised in that** arranged in the activated sludge tank (1) are several cassettes (2) or modules with respectively at least one membrane, wherein the cassettes (2) or modules are connected to an outlet (5) for the discharge of the cleansed waste water that passes through the at least one membrane in each case.

8. Membrane bioreactor according to one of the preceding claims, **characterised in that** assigned to the activated sludge tank (1) is a device for supplying a gas that contains oxygen, such as air, into the waste water.

9. Method for cleaning in particular domestic waste water, in which after filtering, the waste water is supplied to an activated sludge tank (1), in which contaminants are broken down through aerobic metabolic processes by micro-organisms, wherein the micro-organisms are held back at least partially in the activated sludge tank (1) by at least one membrane (2), whilst the waste water that has been cleansed by micro-organisms is diverted out of the activated sludge tank (1), wherein the filtration takes place by means of a fine sieve (6) with a mesh size of 150 µm to 350 µm, in such a way that micro-organisms can pass through the fine sieve (6), **characterised in that** provided as a fine sieve is a micro-drum sieve machine (6), which is cleansed continuously or discontinuously with compressed air and/or screened waste water as a wash-down spray.

10. Method according to claim 9, **characterised in that** filtration takes place in a micro-drum sieve machine (6) with a mesh size of about 250 µm.

11. Method according to one of the claims 9 or 10, **characterised in that** a gas containing oxygen, such as air, is introduced into the activated sludge tank (1).

12. Method according to one of the claims 9 to 11, **characterised in that** arranged upstream of the activated sludge tank (1) is a nitrification zone and/or a denitrification zone (4), a grit interceptor and/or a fat separator.

13. Method according to one of the claims 9 to 12, **characterised in that** the filtered matter is dehydrated and compacted via a conveyor coil, a spiral press or a worm press.

## Revendications

1. Bioréacteur à membrane permettant de nettoyer des eaux usées, en particulier communales, avec un bassin d'aération (1) dans lequel les substances polluantes peuvent être décomposées par des microorganismes dans le cadre de processus de métabolisme aérobies, et comportant au moins un dispositif filtrant disposé dans une conduite d'alimentation du bassin d'aération (1), au moins une membrane (2) permettant de retenir les micro-organismes dans le bassin d'aération (1) étant disposée dans le bassin d'aération (1), **caractérisé en ce que** le dispositif filtrant présente un microtambour cribleur (6) en tant que crible fin, avec une taille de maille comprise entre 150 µm et 350 µm, le microtambour cribleur (6) présentant un tambour (8) pouvant être entraîné, doté de plusieurs nacelles filtrantes (11) et dans lequel tambour débouche une conduite d'alimentation en eaux usées (10), et d'une cuve de déversement reliée au bassin d'aération (1), et **en ce que**, au microtambour cribleur (6) est affecté un dispositif permettant le nettoyage continu ou discontinu du microtambour cribleur (6) avec de l'air comprimé et/ou des eaux usées criblées en tant qu'eaux de projection.

2. Bioréacteur à membrane selon la revendication 1, **caractérisé en ce que** le dispositif filtrant (6) présente un crible fin ayant une largeur de maille d'environ 250 µm.

3. Bioréacteur à membrane selon la revendication 1 ou 2, **caractérisé en ce qu'**il est prévu dans le microtambour cribleur (6) un dispositif de nettoyage (13, 14, 15) avec un dispositif de jet d'eau (15) dirigé vers les filtres (11) depuis le côté déversement, et un dispositif de réception et d'évacuation (13, 14) disposé du côté alimentation du filtre (11).

4. Bioréacteur à membrane selon l'une des revendications 1 à 3, **caractérisé en ce que**, au dispositif de réception et d'évacuation (13, 14), est affecté un serpentin de transport, une presse à serpentin ou une extrudeuse permettant d'assécher et de compacter le produit criblé.

5. Bioréacteur à membrane selon la revendication 4, **caractérisé en ce que**, au dispositif de réception et d'évacuation (13, 14) et/ou au serpentin de transport, à la presse à serpentin et/ou à l'extrudeuse, est affecté un bassin de dessablement.

6. Bioréacteur à membrane selon l'une des revendications 1 à 5, **caractérisé en ce que** les filtres (11) du microtambour cribleur (6) sont formés par un tissu filtrant, en particulier réalisé en polyester (PES).

7. Bioréacteur à membrane selon l'une des revendications précédentes, **caractérisé en ce que** plusieurs cassettes (2) ou modules ayant chacun au moins une membrane sont disposés dans le bassin d'aération (1), les cassettes (2) ou les modules étant reliés à un dispositif de déversement (5) pour permettre l'évacuation des eaux usées nettoyées passant par la au moins une membrane correspondante.

8. Bioréacteur à membrane selon l'une des revendications précédentes, **caractérisé en ce que**, au bassin d'aération (1), est affecté un dispositif d'alimentation des eaux usées en gaz contenant de l'oxygène tel que de l'air.

9. Procédé pour nettoyer des eaux usées, en particulier communales, dans lequel les eaux usées sont acheminées après un filtrage vers un bassin d'aération (1) dans lequel les substances polluantes sont décomposées par des micro-organismes dans le cadre de processus de métabolisme aérobies, les micro-organismes étant retenus au moins en partie dans le bassin d'aération (1) par au moins une membrane (2), tandis que les eaux usées nettoyées par les micro-organismes sont évacuées du bassin d'aération (1), la filtration étant réalisée à l'aide d'un filtre fin (6) ayant une largeur de maille comprise entre 150 µm et 350 µm de telle sorte que les micro-organismes peuvent passer au travers du crible fin (6), **caractérisé en ce qu'**il est prévu comme crible fin un microtambour cribleur (6) qui est nettoyé de manière continue ou discontinue avec de l'air comprimé et/ou les eaux usées criblées en tant qu'eau de projection.

10. Procédé selon la revendication 9, **caractérisé en ce que** la filtration est réalisée dans un microtambour cribleur (6) ayant une largeur de maille d'environ 250 µm.

11. Procédé selon l'une des revendications 9 ou 10, **caractérisé en ce qu'**on introduit dans le bassin d'aération (1) du gaz contenant de l'oxygène, tel que de l'air.

12. Procédé selon l'une des revendications 9 à 11, **caractérisé en ce qu'**une zone de nitrification et/ou une zone de dénitrification (4), un bassin de dessablement et/ou un dispositif de séparation des graisses est raccordé en amont du bassin d'aération (1).

13. Procédé selon l'une des revendications 9 à 12, **caractérisé en ce que** le produit criblé est asséché et compacté par l'intermédiaire d'un serpentin de transport, d'une presse à serpentin ou d'une extrudeuse.
